# EUROPEAN PATENT SPECIFICATION

(11) **EP 2 653 357 B1**
(45) Date of publication and mention of the grant of the patent: **11.03.2015**
(21) Application number: 13164017.9
(22) Date of filing: 16.04.2013
(51) Int. Cl.: B60R 25/02, B60R 25/021, B60R 25/023

(54) **Steering lock for vehicles**
Lenkradschloss für Fahrzeuge
Antivol de direction pour véhicules

(30) Priority: 16.04.2012 IT TO20120329
(43) Date of publication of application: 23.10.2013
(73) Proprietor: TRW Automotive Italia S.r.l., Torino (IT)
(72) Inventor: Graglia, Daniele, 10026 SANTENA (IT)
(74) Representative: Boggio, Luigi

(56) References cited:
- EP-A2- 0 219 002
- EP-B1- 1 688 327
- WO-A1-83/03580
- US-A- 5 635 899

## Description

The present invention relates to a steering lock for vehicles. A prior art steering lock is disclosed in WO83/03580 A1.

In particular, the present invention relates to a steering lock of the type comprising an outer housing coupled to a fixed support, a lug axially slidable within the support to and from a steering column between a locking forward position, wherein a lug end portion engages a retaining seat formed on the steering column, and a release or rest retracted position, wherein it allows the free rotation of the steering column.

In order to prevent the extraction of the lug from the seat during an attempted break-in that involves the breaking of the housing, the known steering locks comprise tamper-proof devices, wherein following the rupture of the housing, a preloaded spring pushes a locking member within a lug seat preventing the sliding of the lug and, therefore, the disengagement of the seat on the steering column.

Though universally used, known devices appear to be relatively complex, difficult to assemble and expensive in some cases, and relatively inefficient, in others.

The purpose of the present invention is to provide a steering lock for vehicles, which allows to solve in a simple and economic way the problems outlined above.

According to the present invention a steering lock for vehicles is provided, comprising an outer housing adapted to be blocked on a fixed body at least partially surrounding a rotating steering shaft, a main member for angular locking of said steering shaft, actuator means for displacing said main member with respect to said housing between a forward operational position, in which the main member is partially inserted within a retaining seat borne by the steering shaft, and a retracted rest position, in which it allows the free rotation of said steering shaft, and temper-proof means activated by the rupture of said outer housing or by the extraction of said main member, **characterized in that** said tamper-proof means comprise an angular locking additional member coupled to said housing and adapted to engage said retaining seat following the removal of said main member.

Preferably, in the above mentioned steering lock, the tamper-proof means further comprise retaining means for maintaining said additional member in a standby position spaced from said retaining seat when said main member is movable between said forward position and retracted position and elastic thrust means for pushing said additional member in engagement with said retaining seat following the displacement of said retaining main member outside the space in the range between said forward position and retracted position.

Preferably, furthermore, the main member and the additional member are housed in said housing in positions parallel to one another and the retaining means comprise said locking main member.

The invention will now be described with reference to the accompanying drawings, which illustrate a non-limiting embodiment, wherein:
Figure 1 illustrates, schematically and in cross-section, a preferred embodiment of the steering lock device according to the present invention arranged in a normal operation condition; and
Figures 2 and 3 are figures similar to Figure 1 and illustrating the steering lock of Figure 1 in two different functional conditions.

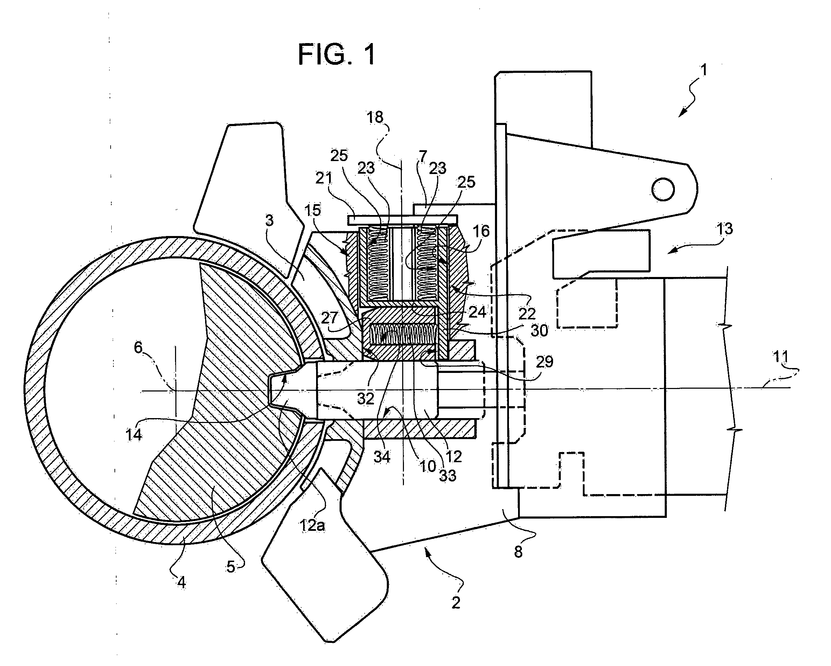

In Figure 1, number 1 indicates, as a whole, a steering lock for vehicles, comprising an outer housing 2, in turn, comprising a front collar portion 3 connected, in a per se known manner, to a fixed tubular body 4 crossed by a steering shaft 5 rotatable about its own axis 6. The housing 2 also comprises an intermediate hollow portion 7 and a rear portion 8.

The front portion 3 and intermediate portion 7 define in their inside a rectilinear guide conduit 10, which extends in a direction 11 perpendicular to axis 6, and to which is coupled, in an axially sliding manner, a lug 12, per se known, for angularly locking the shaft 5 with respect to the fixed tubular body 4.

The lug 12 is movable under the thrust of an electric motor-reducer unit 13, per se known and not described in detail, permanently connected to the rear portion 8 along the direction 11 between a forward angular locking position, wherein a front end portion 12a of the lug 12 engages a retaining radial seat 14 formed on the steering shaft 5 (Figure 1), and a retracted rest position, illustrated with dotted line in figure 1, wherein the lug 12 allows the free rotation of the shaft 5.

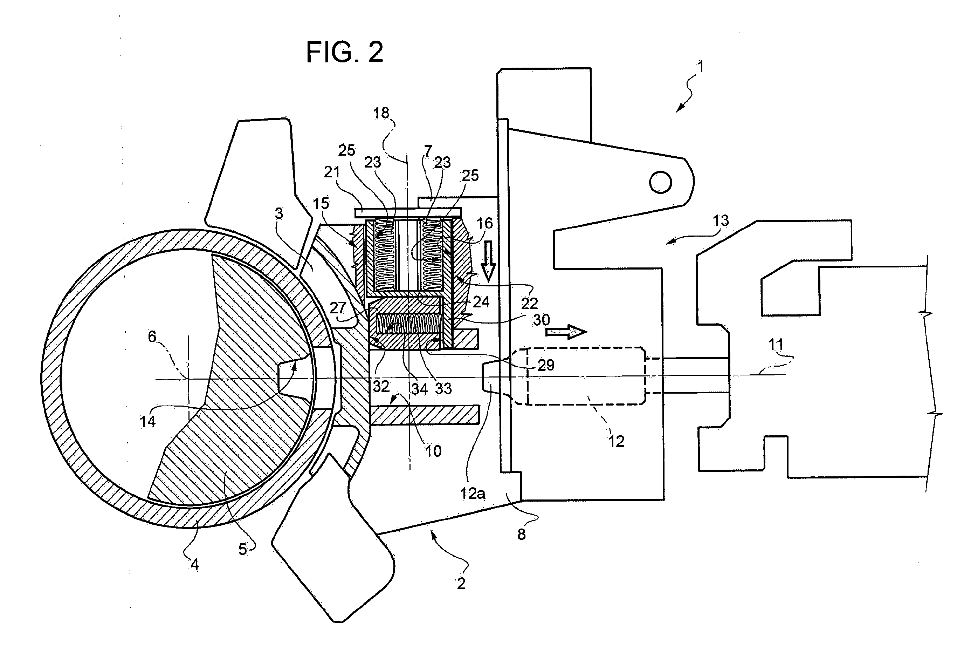

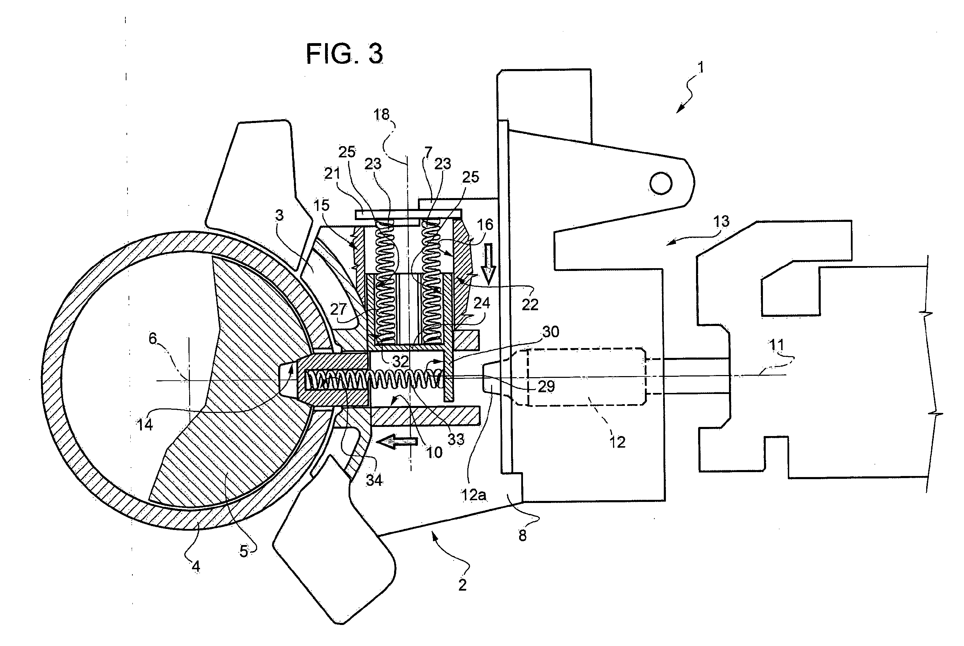

Again with reference to Figure 1, the steering lock 1 also comprises a tamper-proof device 15 activated by the rupture of the outer housing 2 and/or by the removal of the motor-reducer unit 13 and, in general, by the extraction of the lug 12 from the guide conduit 10, as illustrated in Figures 2 and 3.

The device 15 is housed within the housing 2 and, specifically, inside an cavity 16, which is elongated in a direction 18 perpendicular to the direction 11 and to the axis 6 and communicates, on one side, with the guide conduit 10 and, on the other side, with the outside through a side opening 20 of the intermediate portion 7, closed by a lid 21 connected integrally to the portion 7.

The device 15 comprises a slide 22 housed in the cavity 16 and pushed in the direction 18 towards the guide conduit 10 by a pair of springs 23 parallel to the direction 18 itself and compressed between the lid 21, to which the springs 23 are integrally connected, and an intermediate abutment wall 24 of the slide 22 parallel to the direction 11. The springs 23 extend within respective guide sleeves 25 integral with the slide 22 and defining, with the respective springs 23, a guide and slide assembly for guiding the slide 22 in the direction 18.

Again with reference to Figure 2, the tamper-proof device 15 further comprises an angular locking additional lug 27, which extends parallel to the lug 12 and to the direction 11 and within a cavity 29 of the slide 22. The cavity 29 is open towards the conduit 10 and towards the portion 3 and is bounded by the intermediate wall 24 and by a rear portion 30 perpendicular to the direction 11. The additional lug 27 is adapted to engage the guide conduit 10 in axially sliding manner in the same way of the lug 12 and has a front end portion adapted to engage the retaining seat 14, as illustrated in Figure 3.

Again with reference to Figure 1, the additional lug 27 is maintained in contact with the intermediate wall 24 and the slide 22 is maintained in its retracted standby position (illustrated in Figures 1 and 2) by the lug 12, which exerts a counter-action with respect to that of the springs 23, and against which the additional lug 27 is directly supported and slides, in use, during the displacement of the lug 12 between the forward position and the retracted position. When the slide 22 is arranged in its retracted standby position, the front portion of the additional lug 27 is arranged in abutment against a surface 32 of the support portion 3 facing the wall 30 and the same additional lug 27 houses a forced compression spring 33 between the additional lug 27 and the wall 30. In the particular example described, the compression spring 33 slidingly engages a blind hole 34 for defining part of a guide and slide assembly adapted for guiding the additional lug 27 in a direction parallel to the direction 11.

Under normal conditions of use, the lug 12 is displaced by the motor-reducer unit 13 between the aforementioned forward position and retracted position as in a conventional steering lock. In such conditions, the additional lug 27 and the slide 22 are maintained in their retracted standby positions by the lug 12 itself.

When a break-in causes, for example, the rupture of the outer housing 2 or the uncoupling of the motor-reducer unit 13 and, in general, the retraction of the lug 12 beyond its retracted position, i.e. outside the normal path between the forward position and the retracted position, the support of the additional lug 27 on the lug 12 fails and, consequently, the slide 22 is forwarded by the springs 23 towards the conduit 10 until engaging the additional lug 27 itself inside the conduit 10. As soon as the support against the surface 32 fails, the additional lug 27 is pushed by the spring 33 towards the shaft 5 until the additional lug 27 itself is brought to engagement with the seat 14. In this condition, the additional lug 27 performs the same function as the main lug when the latter is in its forward position to prevent the rotation of the steering shaft 5.

From the foregoing, it is evident that the steering lock 1 described allows in an extremely simple way to keep the steering shaft locked in any condition in which the main lug 12 is arranged on the outside of its normal operative space.

The particular embodiment makes the tamper-proof device 15 extremely efficient and reliable over time and is of simple and economical implementation and reduced dimensions. Furthermore, the particular embodiment of the tamper-proof device 15 allows a simple and immediate insertion inside the housing 2 also facilitated by the presence of the side opening formed in the outer side part of the housing 2. The fact of positioning the additional lug 27 directly in contact with the lug 12 allows to reduce the size and geometry of the normal known steering locks when additional and/or dedicated components are avoided. Small overall dimensions and reduced costs are then consequent to the fact that the lug 12 and the additional lug 27 share the same guide conduit to and from the steering shaft 5.

From the above it is, finally, clear that the steering lock 1 described can be subject to modifications and variations without thereby departing from the protective scope defined by the independent claim. In particular, constructively different from the one described could be the slide 22 and/or the pushing mode of the additional lug 27 towards the torsion shaft 5.

Furthermore, the same additional lug 27 could have constructive characteristics different from those indicated and be, for example, coupled to the outer housing 2 in a different manner from that indicated. In particular, the additional lug 27 could be hinged to the outer housing 2 and/or the main lug 12 acting indirectly to the maintenance of the additional lug 27 in its standby position.

## Claims

1. A steering lock (1) for vehicles comprising an outer housing (2) adapted to be blocked on a fixed body (4) and at least partially surrounding a rotating steering shaft (5), a main member (12) for angular locking of said steering shaft (5), actuator means (13) for displacing said main member (12) with respect to said housing (2) between a forward operational position, in which the main member (12) is partially inserted within a retaining seat (14) borne by the steering shaft (5), and a retracted rest position, in which the main locking member allows the free rotation of said steering shaft, and tamper-proof means (15) activated by the rupture of the outer housing or by the extraction of said main member, **characterised in that** said tamper-proof means (15) comprise an angular locking additional member (27) coupled to said outer housing (2) and adapted to engage said retaining seat (14) following the removal of said main angular member.

2. The steering lock according to claim 1, **characterised in that** said tamper-proof means comprise retaining means for maintaining said additional member (27) in a standby position spaced from said retaining seat (14) when said main member (12) is movable between said forward position and retracted position and elastic thrust means (33) for pushing said additional element (27) so as to engage said retaining seat (14) following the displacement of said retaining main member (12) outside the space in the range between said forward and retracted positions.

3. The steering lock according to any of the preceding claims, **characterised in that** said main member (12) and said additional member (27) are housed in said housing (2) in parallel positions.

4. The steering lock according to claim 2, **characterised in that** said retaining means comprise said locking main member (12).

5. The steering lock according to claim 4, **characterised in that** said main member (12) slides in direct contact of said additional member (27) when the additional locking member (27) is arranged in said standby position.

6. The steering lock according to claim 4 or 5, **characterised in that** said outer housing (2) carries a rectilinear guide (10) selectively and slidingly engaged by said locking members.

7. The steering lock according to claim 6, **characterised in that** said tamper-proof means also comprise a movable frame (22) for displacing said additional member (27), first elastic thrust means (23) interposed between said outer housing (2) and said movable frame (22) for pushing said additional element (27) towards said rectilinear guide (10) and second elastic means (33) interposed between said movable frame (22) and said additional element (27) for pushing said additional element (27) in a direction parallel to said rectilinear guide (10) towards said retaining seat (14).

8. The steering lock according to claim 7, **characterised by** comprising a first guide and slide assembly for guiding said frame (22) in a direction orthogonal to said rectilinear guide (10), and a second guide and slide assembly interposed between said movable frame (22) and said additional member (27) for guiding said additional member (27) in a direction coinciding with the displacement direction of said main member (12).

9. The steering lock according to claim 8, **characterised in that** said first and second elastic thrust means (23, 33) define the guides of the first and, respectively, of the second guide and slide assembly.

10. The steering lock according to any of the preceding claims, **characterised in that** said outer housing (22) has a side opening for inserting from outside said tamper-proof device; the tamper-proof device comprising a lid (21) for closing said opening and stably connected to said outer housing (2).

## Patentansprüche

1. Lenkradsperre (1) für Fahrzeuge, die aufweist: ein Außengehäuse (2), das geeignet ist, auf einem feststehenden Körper (4) blockiert zu sein, und eine drehende Lenkwelle (5) mindestens teilweise umgibt, ein Hauptteil (12) zum Lenkwinkelsperren der Lenkwelle (5), eine Betätigungseinuchtung (13) zum Verschieben des Hauptteils (12) im Hinblick auf das Gehäuse (2) zwischen einer vorderen Betriebsposition, in der das Hauptteil (12) teilweise in einen Haltesitz (14) eingesetzt ist, der von der Lenkwelle (5) getragen wird, und einer eingezogenen Ruheposition, in der das Hauptsperrteil die freie Drehung der Lenkwelle eimöglicht, und eine Manipulationsschutzeinrichtung (15), die durch Bruch des Außengehäuses oder durch Herausziehen des Hauptteils aktiviert wird, **dadurch gekennzeichnet, dass** die Manipulationsschutzeinrichtung (15) ein Zusatzlenkwinkelsperrteil (27) aufweist, das mit dem Außengehäuse (2) gekoppelt und geeignet ist, nach Entfernung des Hauptlenkwinkelteils einen Eingriff mit dem Haltesitz (14) herzustellen.

2. Lenkradsperre nach Anspruch 1, **dadurch gekennzeichnet, dass** die Manipulationsschutzeinrichtung aufweist: eine Halteeinrichtung zum Halten des Zusatzteils (27) in einer Bereitschaftsposition, die vom Haltesitz (14) beabstandet ist, wenn das Hauptteil (12) zwischen der vorderen Position und eingezogenen Position beweglich ist, und eine elastische Schubeinrichtung (33) zum Schieben des Zusatzelements (27), um einen Eingriff mit dem Haltesitz (14) nach Verschiebung des haltenden Hauptteils (12) außerhalb des Raums im Bereich zwischen der vorderen und eingezogenen Position herzustellen.

3. Lenkradsperre nach einem der vorstehenden Ansprüche, **dadurch gekennzeichnet, dass** das Hauptteil (12) und das Zusatzteil (27) im Gehäuse (2) in Parallelpositionen untergebracht sind.

4. Lenkradsperre nach Anspruch 2, **dadurch gekennzeichnet, dass** die Halteeinrichtung das Hauptsperrteil (12) aufweist.

5. Lenkradsperre nach Anspruch 4, **dadurch gekennzeichnet, dass** das Hauptteil (12) in direktem Kontakt des Zusatzteils (27) gleitet, wenn das Zusatzsperrteil (27) in der Bereitschaftsposition angeordnet ist.

6. Lenkradsperre nach Anspruch 4 oder 5, **dadurch gekennzeichnet, dass** das Außengehäuse (2) eine geradlinige Führung (10) trägt, mit der die Sperrteile einen selektiven und gleitenden Eingriff herstellen.

7. Lenkradsperre nach Anspruch 6, **dadurch gekennzeichnet, dass** die Manipulationsschutzeinrichtung ferner aufweist: einen beweglichen Rahmen (22) zum Verschieben des Zusatzteils (27), eine erste elastische Schubeinrichtung (23), die zwischen dem Außengehäuse (2) und dem beweglichen Rahmen (22) angeordnet ist, zum Schieben des Zusatzelements (27) zur geradlinigen Führung (10) und eine zweite elastische Einrichtung (33), die zwischen dem beweglichen Rahmen (22) und dem Zusatzelement (27) angeordnet ist, zum Schieben des Zusatzelements (27) in Parallelrichtung zur geradlinigen Führung (10) zum Haltesitz (14).

8. Lenkradsperre nach Anspruch 7, **dadurch gekennzeichnet, dass** sie aufweist: eine erste Führungs- und Gleitanordnung zum Führen des Rahmens (22) in senkrechter Richtung zur geradlinigen Führung (10) und eine zweite Führungs- und Gleitanord-nung, die zwischen dem beweglichen Rahmen (22) und dem Zusatzteil (27) eingefügt ist, zum Führen des Zusatzteils (27) in einer Richtung, die mit der Verschiebungsrichtung des Hauptteils (12) zusammenfällt.

9. Lenkradsperre nach Anspruch 8, **dadurch gekennzeichnet, dass** die erste und zweite elastische Schubeinrichtung (23, 33) die Führungen der ersten bzw. zweiten Führungs- und Gleitanordnung bilden.

10. Lenkradsperre nach einem der vorstehenden Ansprüche, **dadurch gekennzeichnet, dass** das Außengehäuse (2) eine Seitenöffnung zum Einsetzen der Manipulations-schutzvorrichtung von außen hat; wobei die Manipulationsschutzvorrichtung einen Deckel (21) zum Verschließen der Öffnung aufweist, der mit dem Außengehäuse (2) stabil verbunden ist.

## Revendications

1. Antivol sur direction (1) de véhicules comprenant un logement extérieur (2) adapté pour être bloqué sur un corps fixe (4) et entourant au moins partiellement un arbre de direction rotatif (5), un organe principal (12) de verrouillage angulaire dudit arbre de direction (5), des moyens actionneurs (13) permettant de déplacer ledit organe principal (12) par rapport audit logement (2) entre une position opérationnelle avant, dans laquelle l'organe principal (12) est inséré partiellement au sein d'un siège de retenue (14) porté par l'arbre de direction (5), et une position de repos rétractée, dans laquelle l'organe de verrouillage principal permet la rotation libre dudit arbre de direction, et des moyens inviolables (15) activés par la rupture du logement extérieur ou par l'extraction dudit organe principal, **caractérisé en ce que** lesdits moyens inviolables (15) comprennent un organe supplémentaire de verrouillage angulaire (27) couplé audit logement (2) et adapté pour enclencher ledit siège de retenue (14) suite au retrait dudit organe angulaire principal.

2. Antivol sur direction selon la revendication 1, **caractérisé en ce que** lesdits moyens inviolables comprennent des moyens de retenue permettant de maintenir ledit organe supplémentaire (27) dans une position de secours espacé dudit siège de retenue (14) lorsque ledit organe principal (12) est mobile entre lesdites position avant et position rétractée et des moyens de poussée élastiques (33) permettant de pousser ledit élément supplémentaire (27) de façon à enclencher ledit siège de retenue (14) suite au déplacement dudit organe principal de retenue (12) en dehors de l'espace dans la plage entre lesdites positions avant et rétractée.

3. Antivol sur direction selon l'une quelconque des revendications précédentes, **caractérisé en ce que** ledit organe principal (12) et ledit organe supplémentaire (27) sont logés dans ledit logement (2) dans des positions parallèles.

4. Antivol sur direction selon la revendication 2, **caractérisé en ce que** lesdits moyens de retenue comprennent ledit organe principal de verrouillage (12).

5. Antivol sur direction selon la revendication 4, **caractérisé en ce que** ledit organe principal (12) coulisse en contact direct avec ledit organe supplémentaire (27) lorsque l'organe de verrouillage supplémentaire (27) est agencé dans ladite position de secours.

6. Antivol sur direction selon la revendication 4 ou 5, **caractérisé en ce que** ledit logement extérieur (2) comporte un guide rectiligne (10) engagé de façon sélective et coulissante par lesdits organes de verrouillage.

7. Antivol sur direction selon la revendication 6, **caractérisé en ce que** lesdits moyens inviolables comprennent également un cadre mobile (22) permettant de déplacer ledit organe supplémentaire (27), des premiers moyens de poussée élastiques (23) intercalés entre ledit logement extérieur (2) et ledit cadre mobile (22) permettant de pousser ledit élément supplémentaire (27) vers ledit guide rectiligne (10) et des seconds moyens élastiques (33) intercalés entre ledit cadre mobile (22) et ledit élément supplémentaire (27) permettant de pousser ledit élément supplémentaire (27) dans une direction parallèle audit guide rectiligne (10) vers ledit siège de retenue (14).

8. Antivol sur direction selon la revendication 7, **caractérisé en ce qu'**il comprend un premier ensemble guide et coulisse permettant de guider ledit cadre (22) dans une direction orthogonale audit guide rectiligne (10), et un second ensemble guide et coulisse intercalé entre ledit cadre mobile (22) et ledit organe supplémentaire (27) permettant de guider ledit organe supplémentaire (27) dans une direction coïncidant avec la direction de déplacement dudit organe principal (12).

9. Antivol sur direction selon la revendication 8, **caractérisé en ce que** lesdits premiers et seconds moyens de poussée élastiques (23, 33) définissent les guides du premier, et, respectivement, du second ensemble guide et coulisse.

10. Antivol sur direction selon l'une quelconque des revendications précédentes, **caractérisé en ce que** ledit logement extérieur (2) comporte une ouverture latérale permettant d'insérer par l'extérieur ledit dispositif inviolable ; le dispositif inviolable comprenant un couvercle (21) permettant de fermer ladite ouverture et relié de façon stable audit logement extérieur (2).
